Europäisches Patentamt

European Patent Office

Office européen des brevets

(11) Veröffentlichungsnummer: **0 068 586**
**A1**

## (12) EUROPÄISCHE PATENTANMELDUNG

(21) Anmeldenummer: **82200788.6**

(22) Anmeldetag: **25.06.82**

(51) Int. Cl.³: **B 29 D 3/02**, B 65 D 19/32

(30) Priorität: **30.06.81 NL 8103141**

(43) Veröffentlichungstag der Anmeldung: **05.01.83**
Patentblatt 83/1

(84) Benannte Vertragsstaaten: **AT BE CH DE FR GB IT LI LU NL SE**

(71) Anmelder: **STAMICARBON B.V., Postbus 10, NL-6160 MC Geleen (NL)**

(72) Erfinder: **Van Dalen, Hendrik, Elisabethstraat 24, NL-6161 GT Geleen (NL)**

(74) Vertreter: **Hoogstraten, Willem Cornelis Roeland et al, OCTROOIBUREAU DSM Postbus 9, NL-6160 MA Geleen (NL)**

(54) Verfahren zur Armierung von Kunststoffgegenständen mit Metall und Palette mit einer auf diese Weise armierten ober- und/oder Unterplatte.

(57) Aus Kunststoff hergestellte Gegenstände erhalten eine Metallarmierung, die nach ihrer Erwärmung in die Oberfläche der Gegenstände eingelassen wird. Dazu sind in der Oberfläche der Gegenstände Aussparungen angeordnet, deren Form der Form der Armierung entspricht, jedoch in ihren Abmessungen kleiner ist. Beim Einpressen der erwärmten Metallarmierung wird der Kunststoff im Bereich der Metallarmierung erweicht oder geschmolzen und lediglich entsprechend dem aus der Abmessungsdifferenz resultierenden Volumen verdrängt, damit die Armierung in den Aussparungen Platz findet. Die Armierung kann aus Hohlprofilen gebildet sein, die nach aussen weisende Vorsprünge besitzen, wobei der zu verdrängende Kunststoff in Zwischenräumen der Vorsprünge Platz findet.

STAMICARBON B.V.

ED 3296

"VERFAHREN ZUR ARMIERUNG VON KUNSTSTOFFGEGENSTÄNDEN MIT METALL UND PALETTE MIT EINER AUF DIESE WEISE ARMIERTEN OBER- UND/ ODER UNTERPLATTE"

Die Erfindung betrifft ein Verfahren zur Armierung von aus Kunststoff hergestellten Gegenständen mit Metall, wobei die Metallarmierung erwärmt und danach unter Erweichen oder Schmelzen des mit der Armierung in Berührung kommenden Kunststoffs in die Oberfläche des Gegenstandes gepreßt wird.

Kunststoffe werden wegen ihrer besonderen Eigenschaften in großem Umfang verwendet. In den Fällen, in denen die Bauteile keine zu große Materialdicke aufweisen dürfen und doch genügend Steifigkeit oder Zugfestigkeit besitzen müssen, werden die Kunststoffteile einer Konstruktion, die z.B. auf Biegung oder Zug beansprucht wird, mit einer Armierung versehen. Je nach der angestrebten Festigkeit können hierfür verschiedene Materialien eingesetzt werden. Metall wird hierfür oft verwendet. In z.B. einer Spritzgußmatrize kann eine Metallarmierung angebracht werden, die danach mit Kunststoff im Spritzgußverfahren umgossen wird, wodurch die Armierung in den Kunststoff eingebettet wird. Eine andere Kunststoffarmierung wird dadurch erzielt, daß nach

- 2 -

der Herstellung von extrudierten oder im Spritzgußverfahren hergestellten köcherförmigen Profilen Holz- oder Metallkerne in diese hineingesteckt werden. Das ist eine bei der Herstellung von Kunststoffrahmen vielfach angewandte Technik.

Da Rohstoffe und Energie seltener werden, wird mehr und mehr zur Wiederverwendung von Kunststoff übergegangen. Armierte Kunststoffe müssen dazu von ihrer Armierung getrennt werden. Kunststoffe, die nach den vorstehend beschriebenen Methoden armiert sind, haben den Nachteil, daß sich die Trennung der Armierung und des sich um diese befindlichen Kunststoffs nur mit großer Mühe und hohen Kosten durchführen läßt. Aus der französischen Patentschrift 2.097.399 ist eine Armierungsmethode für Kunststoffplatten bekannt, wobei die erwärmte Armierung in die Oberfläche einer fertigen Platte gepreßt wird. Die Armierung bleibt von außen gut zugänglich, um später entfernt werden zu können. Diese Methode hat jedoch den Nachteil, daß das ganze durch die Armierung eingenommene Kunststoffvolumen geschmolzen und verdrängt werden muß. Diese Methode ist denn auch - vor allem für ziemlich starke Armierungsteile - aus energetischem Gesichtspunkt weniger geeignet. Weiterhin dauert der Schmelzprozeß zu lange, um eine wirtschaftliche Betriebsführung zu garantieren. Versuche, den Schmelzprozeß durch Erhöhen der Temperatur der anzubringenden Armierung zu beschleunigen, stoßen auf die Schwierigkeit, daß dadurch die Möglichkeit der Degradation des Kunststoffs vergrößert wird, was bei der Wiederverarbeitung zusätzliche Schwierigkeiten verursacht. Übrigens läßt sich bei dieser
Methode die Verdrängungsrichtung des geschmolzenen Kunststoffs nicht gut beherrschen, wodurch die Oberfläche des
Gegenstandes unregelmäßig wird und dabei ein unansehnliches
Aussehen erhält.

Die Erfindung hat zum Ziel, ein Verfahren zum Armieren von
Kunststoff mit Metall zu schaffen, das die beschriebenen
Nachteile nicht aufweist und wobei die sich nach diesem
Verfahren armierten Kunststoffgegenstände zur Wiederverwendung des Kunststoffs besser eignen.

Das wird dadurch erreicht, daß vor dem Anbringen der
Armierung an der dafür vorgesehenen Stelle ein Teil des
Kunststoffmaterials durch Anordnung einer Aussparung weggelassen wird.

Vorzugsweise wird in der Oberfläche eine Aussparung angebracht, deren Form fast gleich der und kleiner als die
Form des im Kunststoff anzubringenden Teils der Armierung
ist.

Durch das Anbringen der Armierung nach diesem Verfahren
muß nur ein Bruchteil des Armierungsvolumens an Kunststoff
geschmolzen werden. Bei der Herstellung des Gegenstandes
kann weniger Kunststoff verwendet werden, und viel weniger
geschmolzener Kunststoff muß verdrängt werden, was dem
Aussehen des Gegenstandes zugute kommt.

0068586

Um gänzlich zu vermeiden, daß geschmolzener Kunststoff
an die Oberfläche des zu armierenden Gegenstandes tritt,
kann die Aussparung entlang ihrer Oberseite eine Erweiterung
mit solchen Abmessungen besitzen, daß das durch die
Armierung verdrängte Kunststoffmaterial in der Erweiterung
untergebracht werden kann.

Zugunsten der Bindung der Armierung im Kunststoff sowie um
zu vermeiden, daß geschmolzenes Kunststoffmaterial an die
Oberfläche tritt, wird die Oberfläche des im Kunststoff
anzubringenden Teils der Armierung mit Erhöhungen versehen,
wobei die Form der Aussparung gleich der Form und so viel
kleiner als die durch die Spitzen der Erhöhungen der
Armierung bestimmten Form ist, daß das durch die Erhöhungen
verdrängte Kunststoffmaterial ganz oder teilweise durch
den Raum zwischen den Erhöhungen aufgenommen werden kann.
Vorzugsweise wird die Form der Aussparung so gewählt,
daß das durch die Erhöhungen verdrängte Volumen an
Kunststoffmaterial genau durch den Raum zwischen den
Erhöhungen aufgenommen wird.

Die Erfindung betrifft ebenfalls eine Kunststoffpalette
mit einer Metallarmierung, wobei die Palette eine Oberplatte und eine durch Distanzhalter davon getrennte Unterplatte umfaßt.

Dieser Paletten-Typ wird in großem Umfang bei der Lagerung und beim Transport von Waren verwendet. Eine mit Metall armierte Palette dieses Typs ist z.B. aus der belgischen Patentschrift Nr. 845.656 bekannt. Zur Wiederverwendung des Kunststoffs ist diese Palette aufgrund der bereits vorstehend aufgeführten Gründe nicht geeignet. Eine derartige nach der Methode gemäß der französischen Patentschrift 2.097.399 armierte Palette wird an ihrer Oberfläche Unregelmäßigkeiten aufweisen, was eine Schieflage und eine unregelmäßige Lastübertragung in einem Stapel begünstigt.

Die Unterplatte und/oder die Oberplatte einer Palette dieses Typs mit einer Armierung nach dem erfindungsgemäßen Verfahren begegnet diesen Unregelmäßigkeiten, was der technischen Verwendbarkeit der Palette zugute kommt. Da nach dem erfindungsgemäßen Verfahren auch starke Armierungsteile in Form massiver oder köcherförmiger Profile angebracht werden können, ohne daß die Oberfläche dadurch weniger eben wird, kann man der Palette durch die Armierung nur einer Platte bereits genügend Stärke geben. Die Palette ist auch zur Wiederverwendung des Kunststoffs geeignet, da die über die Oberfläche zugängliche Armierung nach Erwärmen bequem aus der Platte gezogen werden kann. Diese Erwärmung kann auf geeignete Weise durch Widerstandserwärmung erfolgen. Zwei als Greifer dienende Elektroden können hierzu außerordentlich gut verwendet werden.

Das Anbringen der Armierung in einer Platte der Palette
bietet sowohl Vorteile bei der Herstellung der Palette als
auch bei der nachträglichen Entfernung der Armierung, da
die dazu dienenden Handlungen nur an einer Seite der
Palette durchgeführt werden müssen.

Es ist von Vorteil, die Armierung nur in der Unterplatte
anzubringen, da die Armierung dann neben einer verstärkenden
Funktion auch dazu dient, dem Verschleiß der Palette,
wenn diese über den Boden geschleift wird, zu begegnen.

Das erfindungsgemäße Verfahren wird nachstehend anhand eines
Anwendungsbeispiels in Form eines in der Zeichnung wiedergegebenen Ausführungsbeispiels einer erfindungsgemäßen
Palette näher beschrieben. In der Zeichnung ist:

> Fig. 1 eine Seitenansicht einer mit Metall
> zu armierenden erfindungsgemäßen
> Palette;

> Fig. 2 eine Unteransicht der Palette
> gemäß Fig. 1;

> Fig. 3 ein Schnitt nach Linie III - III

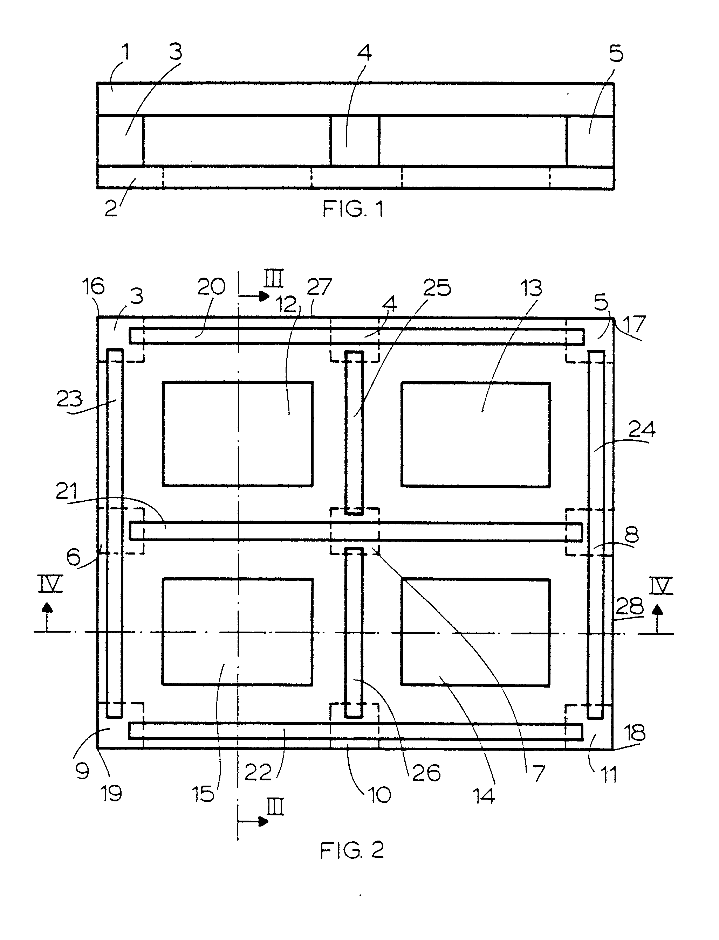

> in Fig. 2;

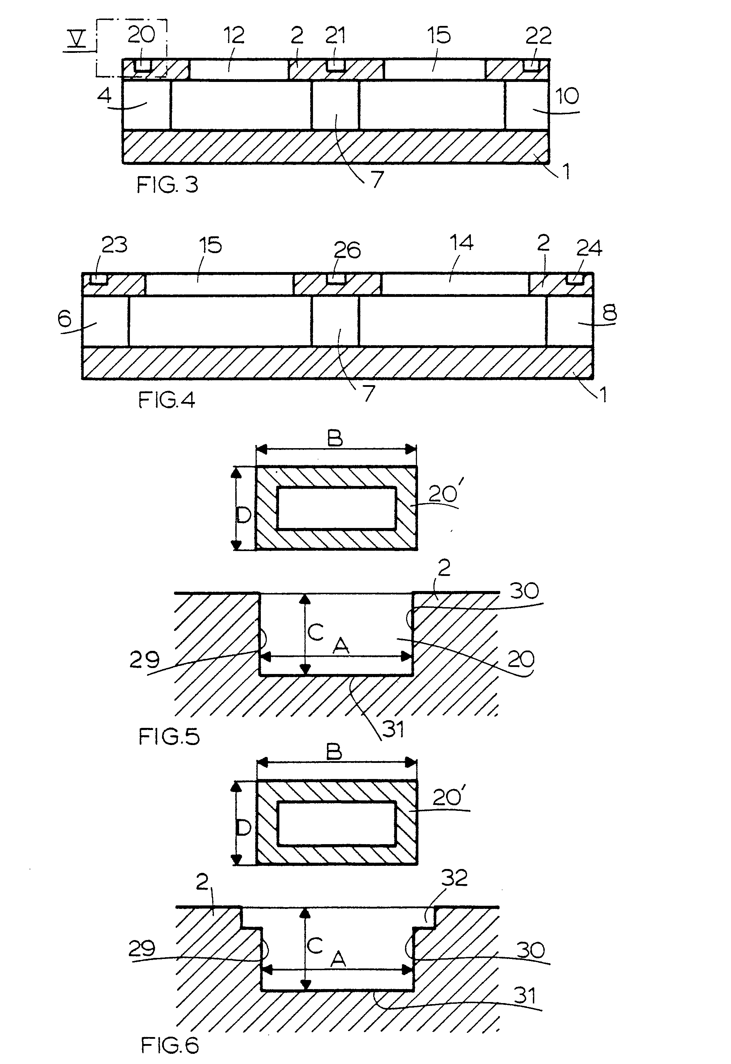

> Fig. 4 ein Schnitt nach Linie IV - IV
> in Fig. 2;

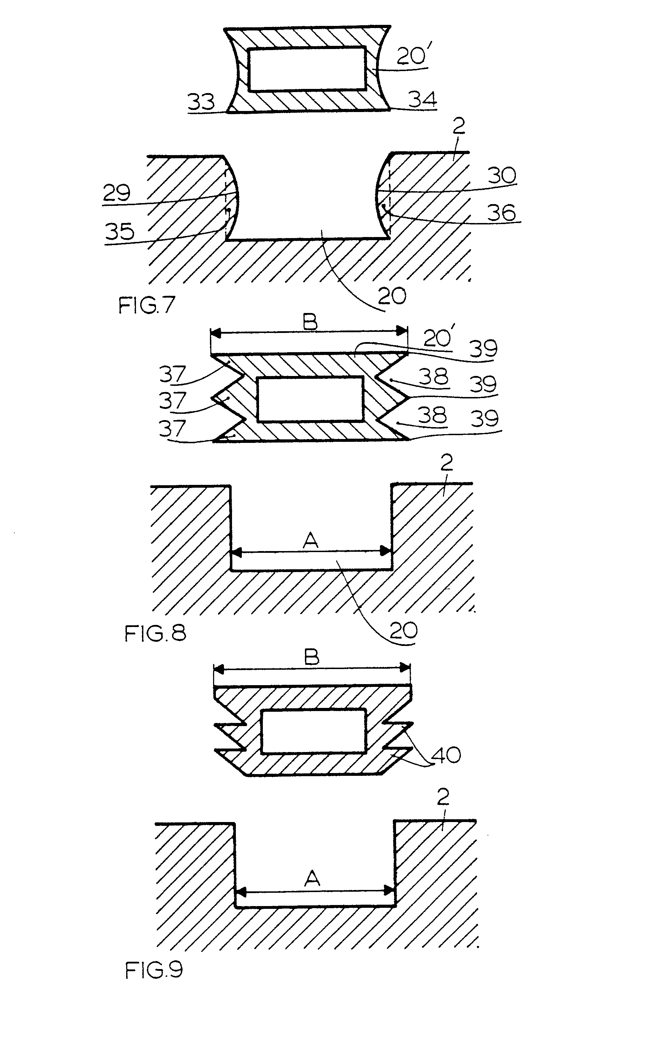

Fig. 5 ein in vergrößertem Maßstab wiedergegebenes Detail nach dem strichpunktiert eingerahmten Teil V in Fig. 3
und ein Querschnitt eines anzubringenden
Armierungsprofils;

Fig. 6 eine Variante von Fig. 5 mit einer
Erweiterung entlang der Oberkante der
Aussparung;

Fig. 7 eine Variante von Fig. 5 mit einer
Aussparung, die mit dem Querschnitt des
Armierungsprofils deckungsgleich ist;

Fig. 8 eine Variante von Fig. 5 mit einem
Schnitt durch ein Querprofil, das mit
Erhöhungen in Form gezahnter Rippen
versehen ist, und

Fig. 9 eine Variante von Fig. 5 mit im
Querschnitt widerhakenförmigen Erhöhungen.

In Fig. 1 und 2 ist eine Seitenansicht bzw. eine Unteransicht
einer mit Metall zu armierenden Palette, die im Spritzgußverfahren aus Kunststoff hergestellt ist, wiedergegeben.
Siehe auch Fig. 3 und 4. Die Palette besitzt eine Oberplatte 1, eine Unterplatte 2 und dazwischen angebrachte
Distanzhalter 3 bis 11. In der Unterplatte befinden sich
Öffnungen 12, 13, 14 und 15. Mit 16, 17, 18 und 19 werden
die Eckpunkte der Palette bezeichnet.

0068586

In der Unterplatte befinden sich gemäß Fig. 2 an der von
den Distanzhaltern abgewandten Seite der Unterplatte und
in deren Oberfläche Aussparungen 2o bis 26, von denen die
Aussparungen 2o, 21 und 22 mit einer langen Seitenkante 27
parallel laufen und die Aussparungen 23 bis 26 mit einer
kurzen Seitenkante 28 der rechteckigen Palette parallel
laufen. Die Aussparungen erstrecken sich immer von einem
Bereich, in dem sich ein Distanzhalter befindet, bis in
einen anderen Bereich, in dem sich ein Distanzhalter
befindet. So erstreckt sich die Aussparung 2o von dem
Bereich des Distanzhalters 3 durch den Bereich 4 des
Distanzhalters 4 bis in den Bereich des Distanzhalters 5.
In Fig. 2 geben die gestrichelten Linien, mit denen die
Stelle des Distanzhalters angegeben ist, ebenfalls die
vorerwähnten Bereiche an. In den Aussparungen der vorstehend beschriebenen Palette wird die Armierung angebracht. Das können massive Metallstäbe sein, jedoch
werden vorzugsweise hohle köcherförmige Profile benutzt.
Als Material ist Aluminium geeignet.

In Fig. 5 ist in vergrößertem Maßstab ein Detail des mit V
gekennzeichneten, strichpunktiert eingerahmten Teils
aus Fig. 3 wiedergegeben, das einen Teil der Unterplatte 2
mit der darin befindlichen Aussparung 2o umfaßt. In der
länglichen Aussparung 2o wird ein Aluminium-Köcherprofil 2o!
als Armierung angebracht, dessen Querschnitt ebenfalls in
Fig. 5 wiedergegeben ist. Die Form der Aussparung 2o ist
gleich der, jedoch kleiner als die Form des anzubringenden Armierungsprofils 2o'. Das bedeutet u.a., daß die mit A
bzw. C angegebenen Maße kleiner sind als die mit B bzw. D
angegebenen Maße. Hierdurch wird erreicht, daß beim
Einpressen des auf genügend hohe Temperatur gebrachten
Profils 2o in die Aussparung dieses Profil mit dem
Kunststoff der Wände 29, 3o und des Bodens 31 der Aussparung in Berührung kommt, wobei diese über eine geringe
Tiefe schmelzen. Wenn das Profil 2o' ganz in die Aussparung 2o gepreßt ist, wird erst - abhängig vom
Maßunterschied zwischen A und B und zwischen C und D -
ein kleiner Teil des geschmolzenen Kunststoffs nach außen
ausgetreten sein.

Um gänzlich zu vermeiden, daß verdrängtes Kunststoffmaterial nach außen tritt, kann die Aussparung, wie in
Fig. 6 aufgezeigt, mit einer Erweiterung 32 versehen sein,
in der eventuell verdrängter Kunststoff aufgenommen werden
kann. Hierbei werden die Abmessungen vorzugsweise so
gewählt, daß der verdrängte Kunststoff die Erweiterung
genau ausfüllt.

In Fig. 7 ist eine Variante von Fig. 5 wiedergegeben. Die
Querschnittsform des Profils 2o' ist gleich der der Aussparung 2o. Während des Einpressens, wobei die Teile 33 und
34 des Profils die Teile 35 und 36 der Wände 29 und 3o
von oben nach untem zum Schmelzen bringen, verschiebt sich
das geschmolzene Material bis in den verengten Teil des
Armierungsprofils. Wenn das Profil ganz eingepreßt ist,
ist kein Kunststoffmaterial nach außen getreten.

Eine andere Variante, die eine gute Verankerung der
Armierung im Kunststoff garantiert, ist in Fig. 8 wiedergegeben. Das Profil 2o' ist hier mit Erhöhungen 37 in Form
von in der Längsrichtung des Profils angebrachten zahnförmigen Rippen versehen. Zwischen den zahnförmigen Rippen
befinden sich Zwischenräume 38. Die Form der Aussparung 2o
ist gleich der und kleiner als die durch die Spitzen 39
der Erhöhungen bestimmte Form des Profils. Das Maß A in
Fig. 8 ist kleiner als Maß B und vorzugsweise so viel
kleiner, daß das durch die Erhöhungen verdrängte Volumen
an Kunststoffmaterial genau durch den Raum zwischen den
Erhöhungen aufgenommen wird. Auf diese Weise tritt kein
verdrängtes Kunststoffmaterial an die Oberfläche.

Die Variante nach Fig. 9 besitzt eine Armierung mit im
Querschnitt widerhakenförmigen Erhöhungen 4o, die eine noch
bessere Verankerung im Kunststoff ergeben und außerdem das
Einbringen der Armierung erleichtern.

Die Palette kann im Spritzgußverfahren einstückig aus Kunststoff hergestellt werden. Es ist auch möglich, z.B. die
Oberplatte und die Distanzhalter einstückig im Spritzgußverfahren und die Unterplatte aus demselben oder
einem anderen Kunststoff im Spritzgußverfahren herzustellen
und diese z.B. durch Leimen oder Spiegellaschen an den
Distanzhaltern zu befestigen.

Die Ober- und/oder die Unterplatte können durch ein Gitterwerk von Rippen gebildet werden, worin die Aussparungen angebracht werden müssen.

Geeignete Kunststoffarten zur Anwendung des Verfahrens
sind Thermoplaste wie Polymere von Äthylen und Propylen
sowie Copolymere von Äthylen und Propylen als auch
Mischungen derartiger Polymere und/oder Copolymere.

Die Armierungsprofile können auch so ausgebildet sein,
daß sie teilweise über der Oberfläche des Kunststoffgegenstandes vorstehen. Hierbei kann der über dem Kunststoff vorstehende Teil die Aussparung abdecken. Ein
T-Profil, dessen vertikaler Schenkel hohl ausgebildet ist,
ist dafür ein geeignetes Armierungselement.

Anstelle eines Profils kann pro Bauteil auch mehr als
ein Profil angebracht werden.

Als Armierung ist durch Galvanisieren oder thermisches
Verzinken vorbehandeltes Eisen oder vorbehandelter Stahl
auch gut verwendbar.

0068586

ED 3296

Patentansprüche:

1. Verfahren zum Armieren von aus Kunststoff hergestellten
   Gegenständen mit Metall, wobei die Metallarmierung
   erwärmt und danach - unter Erweichen oder Schmelzen des
   mit der Armierung in Berührung kommenden Kunststoffs -
   in die Oberfläche des Gegenstandes gepreßt wird,
   dadurch gekennzeichnet, daß vor dem Anbringen der
   Armierung an der dafür vorgesehenen Stelle ein Teil
   des Kunststoffmaterials durch die Anordnung einer Aussparung weggelassen wird.

2. Verfahren nach Anspruch 1, dadurch gekennzeichnet, daß
   vor dem Anbringen der Armierung bereits eine Aussparung in der Oberfläche des Gegenstandes vorgesehen
   wird, deren Form fast gleich der und kleiner als die
   Form des im Kunststoff anzubringenden Teils der
   Armierung ist.

3. Verfahren nach Anspruch 1 oder 2, dadurch gekennzeichnet, daß die Aussparung entlang ihrer Oberkante
   eine Erweiterung mit solchen Abmessungen besitzt, daß
   das durch die Armierung verdrängte Kunststoffmaterial
   in dieser Erweiterung untergebracht werden kann.

4. Verfahren nach einem der Ansprüche 1 bis 3, dadurch gekennzeichnet, daß die Oberfläche des im Kunststoff anzubringenden Teils der Armierung Erhöhungen aufweist, daß die Form der Aussparung gleich der und so viel kleiner ist als die durch die Spitzen der Erhöhungen bestimmte Form der Armierung, daß das durch die Erhöhungen verdrängte Kunststoffmaterial ganz oder teilweise durch den Raum zwischen den Erhöhungen aufgenommen werden kann.

5. Verfahren nach Anspruch 4, dadurch gekennzeichnet, daß das durch die Erhöhungen verdrängte Volumen an Kunststoffmaterial genau durch den Raum zwischen den Erhöhungen aufgenommen wird.

6. Kunststoffpalette mit einer gemäß dem Verfahren nach einem der Ansprüche 1 bis 5 angebrachten Metallarmierung, wobei die Palette eine Oberplatte eine durch Distanzhalter davon getrennte Unterplatte umfasst; dadurch gekennzeichnet, dass mindestens eine der Platten eine Metallarmierung besitzt.

7. Kunststoffpalette nach Anspruch 6, dadurch gekennzeichnet, daß nur die Unterplatte eine Metallarmierung besitzt.

8. Kunststoffpalette nach den Ansprüchen 6 oder 7, dadurch gekennzeichnet, daß die Metallarmierung sich an der von den Distanzhaltern abgewandten Seite einer Platte befindet.

0068586

9. Kunststoffpalette nach einem der Ansprüche 6 bis 8,
   dadurch gekennzeichnet, daß die Metallarmierung sich
   von einem Bereich der Platte, in dem sich ein
   Distanzhalter befindet, bis in einen anderen Bereich,
   in dem sich ein Distanzhalter befindet, erstreckt.

10. Kunststoffpalette nach einem der Ansprüche 6 bis 9,
    dadurch gekennzeichnet, daß die Armierung aus geraden
    Köcherprofilen besteht, wobei die Köcherprofile parallel
    zu den Seitenrändern der Palette verlaufen.

0068586

1/3

FIG. 1

FIG. 2

FIG. 3

FIG. 4

FIG. 5

FIG. 6

FIG.7

FIG.8

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | JP-A-47 046 828<br>* Insgesamt *<br><br>--- | 1,2 | B 29 D 3/02<br>B 65 D 19/32 |
| X | FR-A-1 519 111 (CAVITRON)<br><br>* Insgesamt *<br><br>--- | 1,2,4,5 | |
| X | GB-A-1 180 383 (SANGAMO WESTON)<br>* Insgesamt *<br><br>--- | 1 | |
| X | US-A-3 680 496 (WESTLAKE)<br>* Abbildungen 8,9,17,18 *<br><br>--- | 1,6 | |
| A | US-A-3 499 397 (JOHNSON)<br>* Insgesamt *<br><br>--- | 1,6 | |
| A | DE-A-2 655 593 (WAVIN)<br>* Insgesamt *<br><br>--- | 1,6 | RECHERCHIERTE SACHGEBIETE (Int. Cl. ³) |
| A | FR-A-2 193 740 (JOHNS-MANVILLE)<br>* Insgesamt *<br><br>--- | 1,6 | B 29 D 3/00<br>B 65 D 19/00<br>B 65 D 1/00<br>B 65 D 11/00 |
| A | DE-C- 459 213 (BRINKMANN)<br>* Insgesamt *<br><br>--- | 1 | |
| A | US-A-3 024 147 (BROOKS)<br>* Abbildungen 1-5 *<br><br>----- | 1 | |

Der vorliegende Recherchenbericht wurde für alle Patentansprüche erstellt.

| Recherchenort | Abschlußdatum der Recherche | Prüfer |
|---|---|---|
| DEN HAAG | 05-10-1982 | KUSARDY R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82